# EUROPÄISCHE PATENTSCHRIFT

(11) **EP 1 546 008 B1**
(45) Veröffentlichungstag und Bekanntmachung des Hinweises auf die Patenterteilung: **05.04.2006**
(21) Anmeldenummer: 03788926.8
(22) Anmeldetag: 30.09.2003
(51) Int. Cl.: B65G 1/00

(54) **ANORDNUNG UND VERFAHREN ZUM BELADEN EINES LADERAUMES MIT STÜCKGÜTERN**
SYSTEM AND METHOD FOR LOADING A CARGO SPACE WITH PIECE GOODS
SYSTEME ET PROCEDE POUR CHARGER UN ESPACE DE CHARGEMENT EN PRODUITS DE DETAIL

(30) Priorität: 02.10.2002 DE 10246285
(43) Veröffentlichungstag der Anmeldung: 29.06.2005
(73) Patentinhaber: Kuka Innotec Gmbh, D-86165 Augsburg (DE)
(72) Erfinder: COTTONE, Norbert, 86441 Zusmarshausen (DE); SIMONS, Florian, 70195 Stuttgart (DE)
(74) Vertreter: Lempert, Jost
(86) Internationale Anmeldenummer: PCT/EP2003/010818
(87) Internationale Veröffentlichungsnummer: WO 2004/035426

(56) Entgegenhaltungen:
- DE-A- 19 740 156
- SU-A- 1 782 894
- US-A- 5 099 634

## Beschreibung

### Technisches Gebiet

Die Erfindung betrifft eine Anordnung und ein Verfahren zum Beladen eines Laderaumes mit Stückgüter.

### Stand der Technik

Der industrielle Warenversand von Einzelstückgüter per LKW, Eisenbahn, Schiff oder Flugzeug sieht den Einsatz von Transportcontainern vor, die mit jeweils zu transportierenden Stückgütern zu be- bzw. entladen sind. Typischerweise sehen derartige Transportcontainer ein quaderförmiges Laderaumvolumen vor, das für den Be- bzw. Entladevorgang üblicherweise über eine einzige zu öffnende Laderaumseite zugänglich ist. Von besonderer Bedeutung ist jedoch der Beladevorgang, zumal hierdurch der Füllgrad festgelegt wird, mit dem der Transportcontainer mit einer Vielzahl einzelner Stückgüter beladen wird und der letztlich entscheidend die Wirtschaftlichkeit des Transportes bestimmt. Ebenso gilt es unter Zugrundelegung eines speziellen Beladeplanes, der das Belade- bzw. Stapelmuster für die Stückgüter innerhalb des Containers festlegt, auf die Transportsicherheit der einzelnen Stückgüter sowie auch die des gesamten Transportcontainers zu achten. So erhöhen lose Stückgüter innerhalb des Containers dramatisch die Sicherheit des gesamten Transportes.

Dies vorausgeschickt sollen sich die weiteren Ausführungen vornehmlich auf das Verladen von Stückgütern mit einer flexiblen bzw. verformbaren Stückgutoberfläche beziehen, wie es bspw. von mit Schüttgut gefüllten Säcken der Fall ist, wie bspw. Getreide-, Sand-, Salz-, Gewürz- oder Zuckersäcke etc.. Grundsätzlich können die im Weiteren beschriebenen Aspekte und Massnahmen jedoch auch auf Stückgüter mit festen Stückgutoberflächen, wie bspw. Packete, bezogen werden, wenn auch in einem etwas eingeschränkten Rahmen.

Das Verladen von sackartigen Stückgüter in Containerladeräume erfolgt üblicherweise manuell. Zwar ist die Verwendung eines in einen Laderaum hineinragenden Teleskopgurtförderer bekannt, auf dem die einzelnen Stückgüter vereinzelt in den Laderaum überführbar sind, doch obliegt es nach wie vor einer im Laderaum befindlichen Person, die die antransportierten Stückgüter nach einem entsprechenden Stapelmuster innerhalb des Laderaumes zu deponieren hat. Neben der aufgrund des zum Teil sehr hohen Eigengewichtes der einzelnen Stückgüter ist es mit dieser teilmanuellen Verladetechnik nicht oder nur unter Aufwendung sehr hoher Kraftanstrengungen möglich, Stückgüter bis knapp unter die Laderaumdecke zu stapeln, zumal die Laderaumhöhe zumeist größer als die manuell zugängliche Arbeitshöhe ist.

Vollständig automatisiert ablaufende Beladesysteme, mit denen die vorstehend geschilderten mehrseitig geschlossenen Transportcontainer beladen werden können, stehen derzeit nicht zur Verfügung. Hinzukommt, dass unter Verwendung der zumindest teilautomatisierten Beladetechniken aufgrund des zumeist nur kleinen Zeitfensters, innerhalb dem der Beladevorgang abgeschlossen sein muss, ein exaktes Einhalten der nach einem vorgegebenen Verlademuster vorgegebenen Sollpositionen der einzelnen Stückgüter nicht gewährleistet werden kann. Dies führt häufig dazu, dass die geforderte Stückgutmenge innerhalb des Laderaumes nicht komplett eingebracht werden kann. Insbesondere beim Verladen von in Säcken verpackten Schüttgütern treten beim Ablegen der einzelnen Stückgüter undefinierte Geometrieformen auf, die ungenutzte Zwischenräume innerhalb der stapelförmigen Stückgutanordnung verursachen und damit den Füllgrad des Laderaumes erheblich reduzieren.

Um die engen Platzverhältnisse innerhalb des Laderaumes während des Beladevorganges zu vermeiden sehen sog. 2-stufige Verladevorgänge ein stapelförmiges Zusammenstellen einer Vielzahl einzelner Stückgüter auf Verladepaletten außerhalb des Laderaumes vor, die anschließend als Ganzes in den Laderaum eingebracht werden. Bei diesem Verfahren wird für die Herstellung eines Stückgutstapels nach einem vorgegebenen Palettierschema ein Palettierautomat bzw. -roboter eingesetzt. Um das dreidimensionale Palettierschema in den Laderaum schließlich einzubringen, sind jedoch entsprechende Ladehilfsmittel, bspw. in Form sog. Europaletten erforderlich, die in jedem Fall innerhalb des Laderaumes verbleiben und somit einen nicht unbeträchtlichen Laderaum in Anspruch nehmen. Dies jedoch gilt es zu vermeiden.

Die SU 1782894 A1 betrifft eine Anordnung zum Beladen eines Laderaumes mit Stückgütern, die eine wenigstens teilweise verformbare Stückgutoberfläche aufweisen. Die Stückgüter werden mit Hilfe eines Förderbandes und Lenkeinheiten vereinzelt in eine Übergabeeinrichtung hineingebracht. Die Übergabeeinrichtung weist dabei Formmittel für das jeweilige Stückgut auf, wodurch die Stückgüter in eine vorgebbare Form übergeführt werden können. Anschließend wird die Übergabeeinheit abgesenkt und die Stückgüter durch Öffnen von Klappen in den Formmitteln in den oben offenen Laderaum überführt. Bei der Lehre der SU 1782894 A1 ist insbesondere als nachteilig anzusehen, dass die Stückgüter nur als Einzelne komprimiert werden, d.h. dass die Packungsdichte nicht optimal ist. Des Weiteren kann diese Anordnung nur Laderäume beladen, die nach oben hin geöffnet sind. Insbesondere die Verladung in Seecontainern, bei der ausschließlich von der Stirnseite beladen werden kann, ist damit nicht möglich. Des Weiteren muss mit der Vorbereitung der Stückgüter, d.h. Vereinzeln und Komprimieren, gewartet werden bis die bereits komprimierten, vereinzelten Stückgüter verladen sind.

Weiterhin ist aus der DE 197 19 748 C2 eine Vorrichtung zum Handhaben von Stückgütern, insbesondere von Paketen, für das Be- und Entladen eines Laderaumes sowie ein entsprechendes Verfahren beschrieben, bei dem die einzelnen Stückgüter über eine vertikal verstellbare Fördereinrichtung in bzw. aus dem Laderaum befördert werden können. Ferner schließt sich an die vertikal einstellbare Förderstrecke ein horizontal orientierter Förderabschnitt an, dessen Länge der Breite des Laderaumes entspricht, so dass einzelne Stückgüter gezielt zur Aufnahme bzw. Ablage an einen beliebigen Ort innerhalb des Laderaumes positioniert werden können. Die Aufnahme bzw. Ablage der einzelnen Stückgüter von dem horizontal orientierten Förderabschnitt erfolgt mit Hilfe einer entsprechend vorgesehenen Sauggreifervorrichtung. Die bekannte Vorrichtung dient zwar einer optimalen Ausnutzung des Laderaumvolumens mit Stückgüter, die allerdings selbst über eine konkrete Oberflächenform verfügen und vorzugsweise nahtlos aneinander und übereinander stapelbar sind.

### Darstellung der Erfindung

Der Erfindung liegt daher die Aufgabe zugrunde, eine Vorrichtung und ein Verfahren der eingangs genannten Art dahingehend zu schaffen, dass der Laderaum optimal ausgenutzt wird, ein an einer beliebigen Seite geöffneter Laderaum beladen werden kann und eine hohe Parallelisierung und damit ein hoher Durchsatz beim Verladen von Stückgütern erreicht wird.

Die Lösung der der Erfindung zugrunde liegenden Aufgabe ist im Anspruch 1 angegeben. Gegenstand des Anspruches 21 ist ein erfindungsgemäßes Verfahren zum Beladen eines Laderaumes. Den Erfindungsgedanken vorteilhaft weiterbildende Merkmale sind Gegenstand der Unteransprüche sowie der Beschreibung unter Bezugnahme auf das Ausführungsbeispiel zu entnehmen.

Durch die Erfindung wird eine Anordnung zum Beladen eines Laderaumes mit Stückgüter geschaffen, die vorzugsweise eine wenigstens teilweise verformbare Stückgutoberfläche aufweisen, mit einer Zufördereinrichtung, auf der die Stückgüter vereinzelt zuförderbar sind sowie einer Übergabeeinrichtung auf die die Stückgüter von der Zufördereinrichtung übergebbar und vermittels der die Stückgüter in das Innere des Laderaumes verbringbar sind, und derart weiterzubilden, dass der Laderaum unter weitgehender Vermeidung von Zwischenräumen zwischen den vorzugsweise stapelförmig innerhalb des Laderaumes abgelegten Stückgüter befüllbar ist. Es ist insbesondere möglich, Stückgüter, deren Stückgutoberfläche zumindest teilweise flexibel ausgebildet ist, wie bspw. im Falle von mit Schüttgut gefüllten Säcken, wie bspw. Sand-, Getreide- oder Zuckersäcke, derart zu befördern und handzuhaben, dass sie letztlich unter Vorgabe eines bestimmten Ladeplanes raumoptimiert, im Sinne der Vermeidung der vorstehend genannten Zwischenräume innerhalb des Laderaumes deponierbar sind. Auch erfolgt der Beladevorgang sicher, um Beschädigungen bzw. Verluste der zu verladenden Stückgüter zu vermeiden. Die Beladezeit für den gesamten Beladevorgang ist gegenüber den bekannten Beladetechniken reduziert.

Die der Erfindung zugrunde liegende Idee sieht eine gezielte Formgebung oder Umorientierung der zu verladenden Stückgüter vor, bevor sie in den Laderaum zur weiteren Deponierung gelangen. Die Formgebung oder Umorientierung erfolgt derart, dass die einzelnen Stückgüter in eine geometrisch kompakte, stapelförmige Form überführt werden, die während des gesamten Beladevorganges beibehalten wird bis letztlich die einzelnen Stückgüter innerhalb des Laderaumes zur Ausbildung einer stapelförmigen Stückgutanordnung innerhalb des Laderaumes deponiert werden.

Hierdurch kann der Füllgrad des mit den einzelnen Stückgütern befüllten Laderaumes deutlich gesteigert werden. Durch eine automatisierte Überführung der in ihrer Raumform füllgradoptimierten, z.T. komprimierten einzelnen Stückgütern in den Laderaum werden keine weiteren Ladehilfsmittel benötigt, die innerhalb des Laderaumes verbleiben und auf diese Weise wertvolles Ladevolumen in Anspruch nehmen. Vielmehr werden die einzelnen Stückgüter jeweils lagenweise (2-dimensional) oder blockweise (3-dimensional) in den Laderaum verbracht und dort unter Ausbildung sich weitgehend selbst stabilisierender Stückgutstapel deponiert. Aufgrund der Möglichkeit der vollautomatischen Beladung des Laderaumes durch seitliches oder stirnseitiges Einführen von in Lagen angeordneten, in ihrer Raumform komprimierten Stückgütern in mehrseitig geschlossene Laderäume können die mit dem Verladevorgang verbundenen Kosten erheblich reduziert werden, insbesondere kann auf jegliches für den Übergabevorgang der Stückgüter in den Laderaum erforderlichen Hilfskräfte verzichtet werden.

Im Einzelnen sieht die erfindungsgemäße Anordnung zum Beladen eines Laderaumes mit Stückgütern, die vorzugsweise eine wenigstens teilweise verformbare Stückgutoberfläche aufweisen, eine Zufördereinrichtung vor, die üblicherweise als ein Linearfördersystem ausgebildet ist und auf die die Stückgüter vereinzelt zuförderbar sind, sowie eine Übergabeeinrichtung, auf die die Stückgüter von der Zufördereinrichtung übergebbar und vermittels der die Stückgüter in das Innere des Laderaumes verbringbar sind. Erfindungsgemäß ist die Anordnung derart weitergebildet, dass wenigstens ein Formmittel vorgesehen ist, durch das die Stückgüter in jeweils eine vorgebbare Form überführbar sind. Das die äußere Raumform zumindest längs einer Raumachse der zu verladenden Stückgüter bestimmende bzw. verändernde Formmittel bewirkt einen gezielten äußeren Krafteintrag auf jedes einzelne Stückgut, wodurch jedes einzelne Stückgut eine komprimierte Raumform einnimmt.

Selbstverständlich ist es auch möglich die erfindungsgemäße Anordnung für das Verladen von Stückgütern einzusetzen, deren Stückgutoberfläche keine oder nur eine geringfügige Verformbarkeit aufweisen, wie es bspw. bei Paketen der Fall ist. In diesem Fall sorgt das Formmittel zumindest für eine Stabilisierung der ohnehin vorhandenen Raumform der einzelnen Stückgüter, die es im Weiteren gilt, mittels der Übergabeeinrichtung unter Beibehaltung ihrer durch das Formmittel vorgegebenen Form einzeln oder in Gruppen mit Hilfe jeweils eines Lademittels in das Innere des wenigstens einseitig offenen Laderaumes zu überführen. Im einfachsten Fall ist das Formelement als einfache Platte ausgeführt.

In einer bevorzugten Ausführungsform entspricht das Lademittel, mit dem die einzelnen Stückgüter in das Innere des Laderaumes verbracht werden dem Formmittel, innerhalb dem die einzelnen Stückgüter ihre gewünschte kompakte Raumform annehmen. Das Lademittel dient darüber hinaus dazu, dass die einzelnen in ihrer Raumform kompakt gehaltenen Stückgüter in den Laderaum zur weiteren Deponierung verbracht werden. Schließlich dient eine Separiereinheit dafür, die kompakten Stückgüter von dem Lademittel zu trennen, um die Stückgüter letztlich zur Ausbildung von Stückgutstapeln im Laderaum zu deponieren.

Um die Ausbildung einer möglichst kompakten Raumform unter den einzelnen zu verladenden Stückgüter zu erhalten, werden diese vor dem eigentlichen Übergabevorgang in den Laderaum vorzugsweise längs dreier orthogonal zueinander gerichteter Raumachsen mit Hilfe geeigneter Formmittel derart kraftbeaufschlagt, dass die Stückgüter hinsichtlich ihrer Höhe, Länge und Breite komprimiert bzw. verformt werden. Eine derartige räumliche Komprimierung erfolgt vorzugsweise in nachstehender aufeinanderfolgender Schrittweise:

Mit Hilfe eines zumindest abschnittsweise vorzugsweise motorisch angetriebenen Linearförderer werden die Stückgüter vereinzelt, bspw. längs eines Förderbandes in den Bereich vor dem zu beladenen Laderaums zugefördert. Alternativ ist es ebenso möglich den Linearförderer als schiefe Ebene auszubilden, längs der die Stückgüter nacheinander abrutschen.

Die als Linearförderer ausgebildete Zufördereinrichtung sieht einen als Stauförderer ausgebildeten Endabschnitt vor, der eine Anschlagfläche aufweist, gegen die die Stückgüter gefördert werden und durch die dabei entstehende Stauwirkung kraftbeaufschlagt gegenseitig zusammenstoßen und eine Stückgutreihe bilden. Längs dieser Stückgutreihe erfahren alle Stückgüter eine erste Komprimierung längs einer ersten Raumachse, nämlich in Förderrichtung des Förderbandes.

In diesem Zustand sorgt eine Transfervorrichtung für die Übergabe der reihenhaft gestauten und einachsig gestauchten Stückgüter in ein Formmittel, das vorzugsweise zugleich auch als Lademittel dient. Das Lade- bzw. Formmittel besteht vorzugsweise aus einem U-förmigen Längsprofil, dessen Länge zur vollständigen Aufnahme der von der Transfervorrichtung erfassten Stückgüterreihe bemessen ist Die Übergabe der Stückgüterreihe in das U-förmige Lademittel erfolgt derart, dass die aneinander gestauten Stückgüter bedingt durch ihr Eigengewicht zwischen die nach oben geöffneten Längsprofilschenkel des Lademittels hineingleiten bzw. hineinfallen, wodurch die längs einer Reihe gestauten Stückgüter durch den Aufprall innerhalb des Lademittels vertikal und somit orthogonal zur Stückgutreihe zusätzlich verformt werden. Ferner ist der Abstand zwischen beiden Längsprofilschenkeln des Lademittels derart bemessen, so dass alle innerhalb des Lademittels befindlichen Stückgüter beidseitig durch die Längsprofilschenkeln einen mechanischen Zwang erfahren, wodurch jedes einzelne Stückgut zudem orthogonal zur Vertikalen alsauch zur Achse längs der Stückgutreihe verformt wird. Auf diese Weise befinden sich innerhalb des Lademittels um alle drei Raumachsen komprimierte bzw. gestauchte Stückgüter, die über eine höchst kompakte und hinsichtlich des Füllgrades optimale Stückgutform verfügen.

Der Grad der Verformung längs jeder einzelnen Raumachse bzw. der für die Verformung erforderliche Krafteintrag kann je nach Stückgutart individuell eingestellt bzw., gewählt werden, so dass einerseits dafür gesorgt ist, dass jedes einzelne Stückgut eine möglichst optimale kleinste Raumform einnimmt, andererseits jedoch jegliche Verletzungen bzw. Beschädigungen der Stückgutoberfläche vermieden werden können. Eine derartige individuelle Einstellung der Krafteinträge auf die einzelnen Stückgüter lässt sich bspw. durch die Fördergeschwindigkeit längs des Linearförderers, die Fallhöhe mit der die einzelnen Stückgüter von der Transfervorrichtung in das jeweilige Formmittel hineinfallen sowie durch den lichten Abstand zwischen den Längsprofilschenkeln des Formmittels vornehmen. Alternativ hierzu kann das Stückgut mittels eines Handhabungseinheit, vorzugsweise eines Industrieroboters, vorzugsweise mit mindestens 5 Achsen, aufgenommen und auf das Lademittel abgelegt werden.

Zur Beladung des Laderaumes, der vorzugsweise über einen rechteckig ausgebildeten Ladeboden verfügt, wird eine bestimmte Vielzahl von mit Stückgütern befüllten, U- oder plattenförmig ausgebildete Lademittel parallel nebeneinander mit Hilfe einer Beladeeinheit, auf die unter Bezugnahme auf das im Weiteren geschilderte Ausführungsbeispiel im Detail eingegangen wird, bereitgestellt und an eine vertikal höhenverstellbare Fördereinrichtung übergeben, mit der die Vielzahl der Lademittel samt der darin befindlichen Stückgüter in einer weitgehend horizontalen Förderrichtung in das Innere des wenigstens einseitig offenen Laderaumes einführbar ist. Alternativ hierzu kann die höhenverstellbare Fördereinrichtung auch unterhalb des Laderaumes angeordnet werden. Hierbei weisen alle nebeneinander angeordneten Lademittel eine Gesamtbreite auf, die gleich oder geringfügig kleiner als die Laderaumbreite bemessen ist.

Gesetzt den Fall, dass der Laderaum vollständig leer ist, so erfolgt ein Einbringen einer ersten Lage aus komprimierten Stückgüter in den Laderaum derart, dass die vertikal höhenverstellbare Fördereinrichtung die Lademittel knapp über dem Laderaumboden vertikal ausrichtet. Die erfolgt Sensor-unterstützt, so dass auch für diesen Justier-Vorgang auf manuelle Hilfe vollständig verzichtet werden kann. Ist der Laderaum bereits bis zu einer bestimmten Füllhöhe gefüllt, so detektiert das Sensorsystem, bspw. in Form eines Licht- oder Ultraschallsensorsystems, die aktuelle Füllhöhe, gegenüber der sich die Fördereinrichtung mit den befüllten Lademittel vertikal ausrichtet.

Das Ablegen der Stückgüterreihen innerhalb des Laderaumes erfolgt derart, dass die Fördereinrichtung die gesamten auf der Fördereinrichtung befindlichen Lademittel horizontal in das Inneren des Laderaumes verfährt und mit einer Separiereinheit in Eingriff kommt, die zu Seiten der Laderaumöffnung an der Fördereinrichtung angebracht ist und über rechenartig ausgebildete Haltemittel verfügt, die stirnseitig jeweils in die Lademittel absenkbar sind.

Im Weiteren werden die Lademittel in Gegenförderrichtung aus dem Laderaum zurückgezogen, wobei zugleich die Haltemittel der Separiereinheit die innerhalb der einzelnen Lademittel befindlichen Stückgüterreihen daran hindern, zusammen mit den Lademitteln aus dem Laderaum wieder herausgezogen zu werden. Vielmehr werden die einzelnen Stückgüter längs einer Stückgüterreihe bezogen auf das jeweilige Lademittel in Art eines "Kuchenschieber-Prinzips" aus dem Lademittel abgeschoben und somit auf den Laderaumboden abgelegt. Durch Wegfall des äußeren mechanischen Zwangs, der auf die Stückgüter innerhalb der Lademittel einwirkt, vermögen sich nun die aus den Lademitteln ausgebrachten Stückgüter durch ihr Eigengewicht und ihre Eigenverformbarkeit geringfügig auszudehnen, wodurch sie in der lagenartigen Anordnung gegenseitig in Berührung trete und sich zudem gegenseitig zu stabilisieren vermögen.

Der weitere Beladevorgang erfolgt in der vorstehend beschriebenen Weise lagenförmig, d. h. durch die sukzessive Übergabe einzelner Stückgutlagen in den Laderaum wächst die Stückgutstapelhöhe entsprechend an, bis ein für die oberste Lage vorhandener Zwischenspalt innerhalb des Laderaumes mit einer letzten Lage ausschließlich bestehend aus Stückgütern befüllt wird.

Durch die erfindungsgemäße gezielte äußere Krafteinwirkung auf die zu verladenden Stückgüter bis unmittelbar zum Augenblick, in dem die einzelnen Stückgüter lagenweise zur Ausbildung von Stückgutstapeln innerhalb des Laderaumes deponiert werden, ist einerseits dafür gesorgt, dass die Stückgüter selbst über eine optimale, stapelbare Raumform verfügen, die das zur Verfügung stehende Ladevolumen weitgehend ohne Ausbildung platzverschwendender Zwischenräume zwischen zwei benachbarte Stückgüter nutzt. Zum Anderen hat die Reduzierung der Zwischenräume innerhalb des Stapelmusters der Stückgüter eine Vergrößerung der Reibflächen zwischen den einzelnen Stückgütern zur Folge, wodurch die zwischen den Stückgütern wirkende Reibkraft erhöht und zugleich die Stabilität des gesamten innerhalb des Laderaumes deponierten Stückgutstapels verbessert wird.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Laderaumsituation mit lagenförmigen Stückgutstapeln,
- Fig. 2: schematisierte Gesamtübersicht der Beladeanordnung,
- Fig. 3a - c: Darstellungen der Zufördereinrichtung,
- Fig. 4a - c: schematisierte Darstellung der Transfervorrichtung,
- Fig. 5: schematisierte Darstellung der Beladeeinheit,
- Fig. 6: schematisierte Darstellung der Bereitstellungseinheit sowie
- Fig. 7a, b: Darstellung der Separiereinheit.

### Wege zur Ausführung der Erfindung, gewerbliche Verwendbarkeit

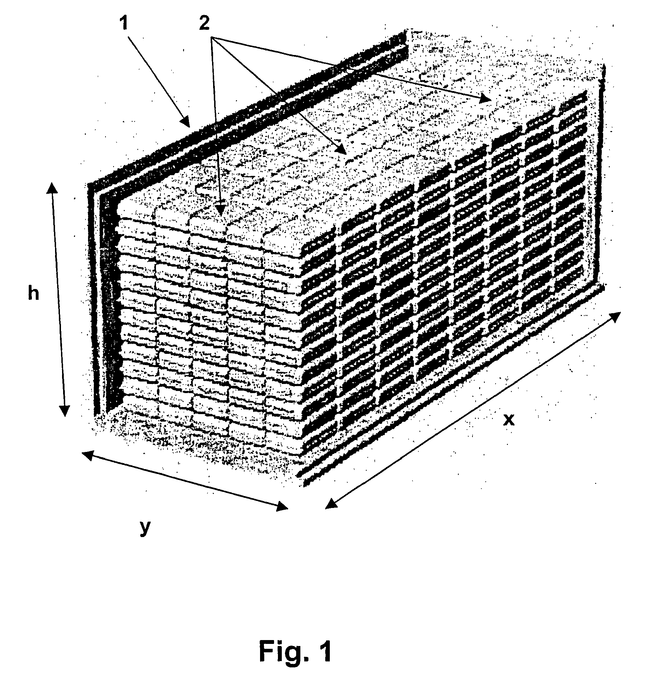

Ziel der erfindungsgemäße Anordnung ist es, eine automatische, füllgradoptimierte, stirnseitige oder seitliche Verladung von flexiblen Gütern, vorzugsweise von Sand-, Getreide- oder Zuckersäcken, in einen mehrseitig geschlossenen Laderaum zu ermöglichen. Um einen möglichst hohen Raumnutzungsgrad innerhalb des Laderaumes erzielen zu können, werden die zu verladenden Stückgüter vor der Verladung in eine für die Verladung optimale Raumform und/oder Orientierung gebracht. Das auf diese Weise innerhalb des Laderaums erzeugbare stapelförmige Lagenmuster, wie es aus der Figur 1 schematisiert zu entnehmen ist, weist ein Minimum an Zwischenhohlräumen zwischen den stapelförmig angeordneten Stückgütern auf. Mit den so vorgeformten Stückgütern ist das in Figur 1 dargestellte Palettiermuster mit x Stückgütern in der Laderaumtiefe, y Stückgütern in der Laderaumbreite sowie z Stückgütern in der Laderaumhöhe innerhalb des Laderaumes 1 realisierbar. Die Werte für x, y und z ergeben sich aus dem Laderaum 1 sowie Stückgutdimensionen unter Berücksichtigung bzw. entsprechender Ausnutzung ihrer Verformbarkeit. Der in Figur 1 gezeigte Laderaum1 ist lediglich der besseren Sichtbarmachung der lagen- und stapelförmigen Stückgüter von drei Seiten offen ausgebildet. Der reale Fall sieht in der Regel einen Laderaum vor, der von der Stirn- oder von der Längsseite her zugänglich ist.

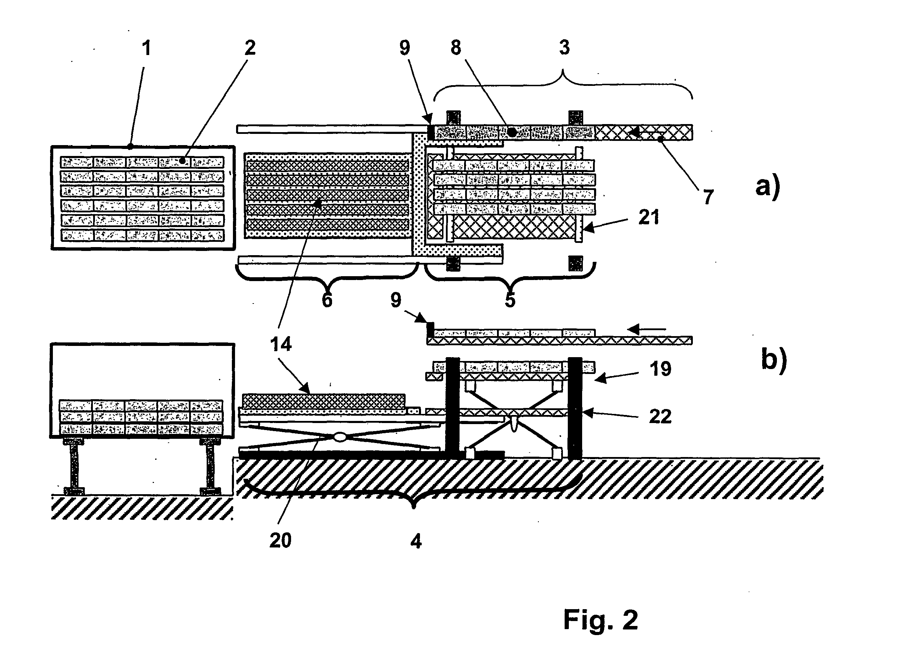

Zur Realisierung des vorstehend genannten Ziels dient die in der Figur 2 dargestellte Anordnung in der Gesamtansicht in der Draufsicht (Fig. 2a) und in der Seitenansicht (Fig. 2b). Hierbei gilt es den Laderaum 1 mit Stückgüter 2 füllgradoptimiert zu beladen mit Hilfe einer Beladeanordnung, die aus einer Zufördereinrichtung 3 sowie einer Übergabeeinrichtung 4 besteht. Letztere weist eine Beladeeinheit 5 sowie eine vertikal höhenverstellbare Fördereinrichtung 6 auf, auf der ein in weitgehend horizontaler Förderrichtung bewegbares Schlittensystem 25 angebracht ist. Alternativ zur höhenverstellbaren Fördereinrichtung 6 kann auch der gesamte Laderaum über eine höhenverstellbare Einheit in der Höhe bewegt werden.

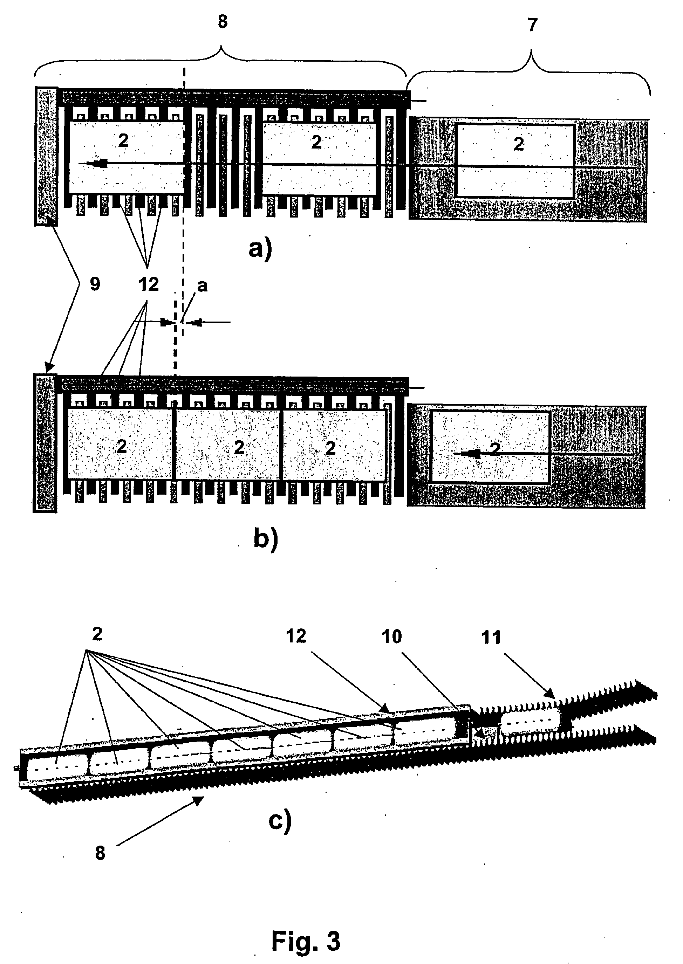

Die zu verladenden Stückgüter 2 werden mittels der Zufördereinrichtung 3 (siehe auch Figur 3 a und 3b), die eine motorangetriebene Linearfördereinheit 7 aufweist einzeln zugefördert. Am Ende der Förderstrecke der Zufördereinheit 3 werden die Stückgüter mittels eines Stauförderers 8 zu einer Reihe aufgestaut. Der Stauförderer 8 besteht vorzugsweise aus einem nicht motorangetriebenen Rollenförderer und weist am Ende eine Anschlagfläche 9 auf, gegen die das in Förderrichtung erste Stückgut anschlägt. Durch das Aufstauen einer Vielzahl von Stückgütern 2 längs einer Reihe wirken zwischen den einzelnen Stückgütern Puls- und Druckkräfte in Förderrichtung, wodurch die einzelnen Stückgüter 2 in Förderrichtung verformt werden.

Wie im Weiteren noch deutlich zu erkennen ist, bemisst sich die Länge des Stauförderers 8 und die damit herstellbare Stückgüterreihe nach der Länge x des zu beladenden Laderaumes (siehe Figur 1). Alternativ hierzu kann das Stückgut mittels eines Handhabungseinheit, vorzugsweise eines Industrieroboters, aufgenommen und direkt auf das Lademittel abgelegt werden.

In Figur 3c ist eine alternative Ausführungsform eines Stauförderers 8 perspektivisch dargestellt, der sieben in Reihe angeordnete einzelne Stückgüter 2 zu fassen vermag. Vor Eintritt in den Stauförderer 8 ist eine parallel zur unteren Transportbandebene 10 obere Rollenanordnung 11 vorgesehen, durch die die einzelnen Stückgüter 2 bereits längs ihrer Dicke zu einem vorgegebenen Mindestmaß komprimiert werden.

Müssen die Stückgüter zur Erreichung der optimalen Füllungsdichte in ihrer Orientierung verändert werden, so weist der Stauförderer 8 darüber hinaus eine U-förmig ausgebildete Transfervorrichtung 12 auf, zwischen deren Seitenschenkel die einzelnen aufgestauten Stückgüter 2 längs ihrer Dicke auf ein Mindestmaß komprimiert sind. In Figur 3c ist die Transfervorrichtung perspektivisch dargestellt. Der in der Figur 3c untere Seitenschenkel der Transfervorrichtung 12 ist fingerartig ausgebildet und ragt mit seinen Fingerelementen 12' in die Zwischenräume der Rollenanordnung des Stauförderers 8. Gleiches ist auch den Figuren 3 a, b zu entnehmen, aus denen der Abstand a zwischen den Fingerelementen 12' und den Rollen des Stauförderers 8 ersichtlich ist. Durch die fingerartige Ausbildung wenigstens eines Seitenschenkels der Transfervorrichtung 12 ist es möglich die Transfervorrichtung 12 gegenüber der Rollenebene des Stauförderers 8 zu verkippen.

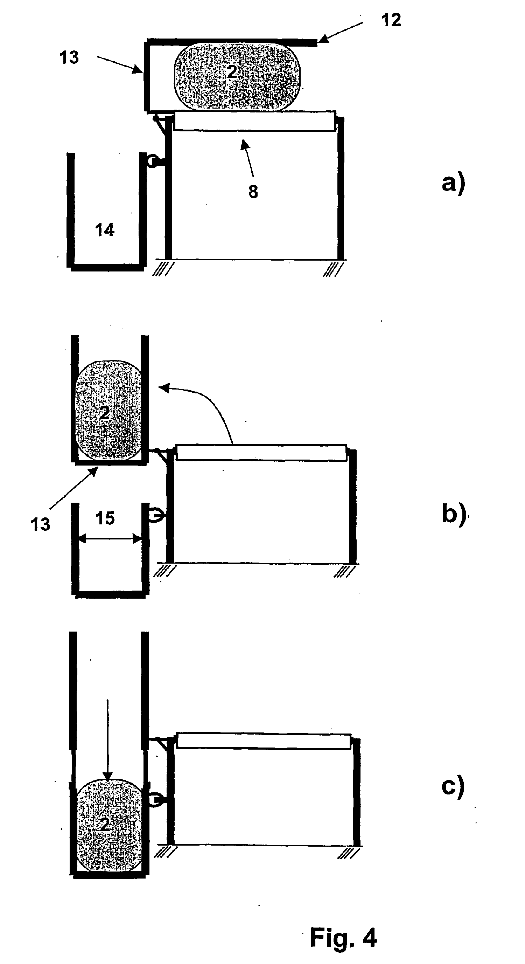

Ist der Stauförderer 8 vollständig mit zu verladenden Stückgütern befüllt, so gilt es die in Förderrichtung sowie längs ihrer Dicke verformten Stückgüter auf die Beladeeinheit 5 zu übergeben. Eine Ausführungsform des hierfür erforderlichen Übergabe- bzw. Transfermechanismus ist in den Figuren 4a - c dargestellt. Figur 4a zeigt ein Querschnittsbild eines mit Stückgütern 2 befüllten Stauförderers 8, mit einer U-förmig ausgebildeten Transfervorrichtung 12, die über ein Schließklappensystem 13 verfügt. Neben dem Stauförderer 8 ist ein leeres Formmittel 14 vorgesehen, in das für den weiteren Beladeprozess die aufgereihten Stückgüter 2 überführt werden müssen. Gemäß Bilddarstellung Figur 4 b kippt die Transfervorrichtung 12 um 90° mit verschlossenem Klappensystem 13 fluchtend über das Formmittel 14, das als U-förmiges Längsprofil ausgebildet ist. In Figur 4 c wird das Klappensystem 13 geöffnet, wodurch die aufgereihten Stückgüter 2 durch ihr Eigengewicht beschleunigt in das Formmittel 14 fallen und hierdurch längs der Fallrichtung eine weitere Formkomprimierung erfahren. Der lichte Abstand der Seitenwände 15 des Formmittels 14 dient ebenso der Dickenkomprimierung der Stückgüter 2, wodurch die nun in allen 3 Raumrichtungen komprimierten Stückgüter vermittels des Formmittels 14 in einer vorgebbaren optimiert komprimierten Form gehalten werden.

Falls das auf die Länge bezogene erforderliche Maß der Stückgüterreihe durch die vorangegangene Stauförderung nicht erreicht werden konnte, kann die Länge der Stückgüterreihe innerhalb des Formmittels 14 mittels eines nicht weiter dargestellten verschiebbaren Anschlag in Längsrichtung des Formmittels nachträglich auf ein gewünschtes Maß gebracht werden.

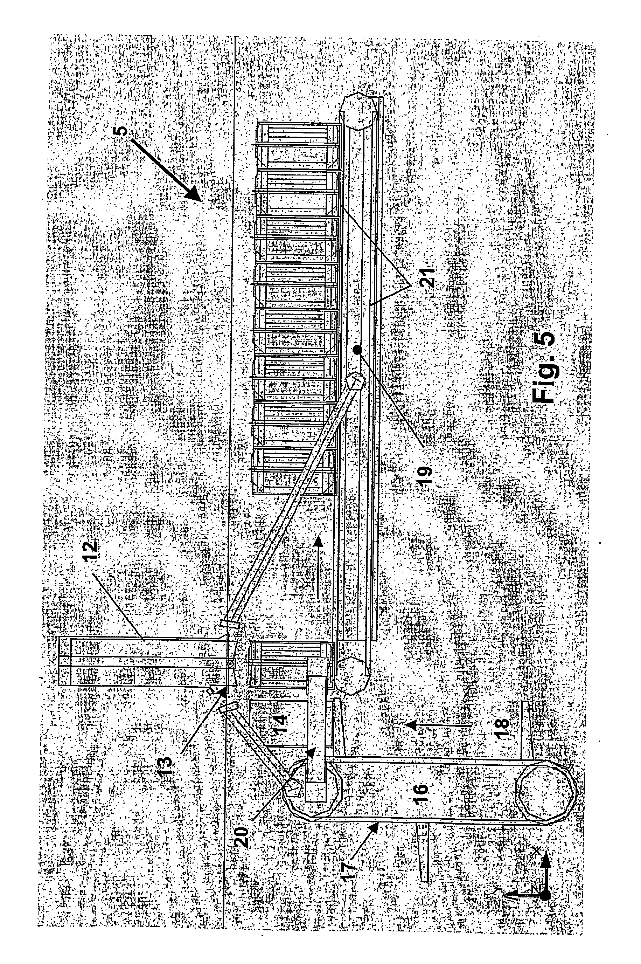

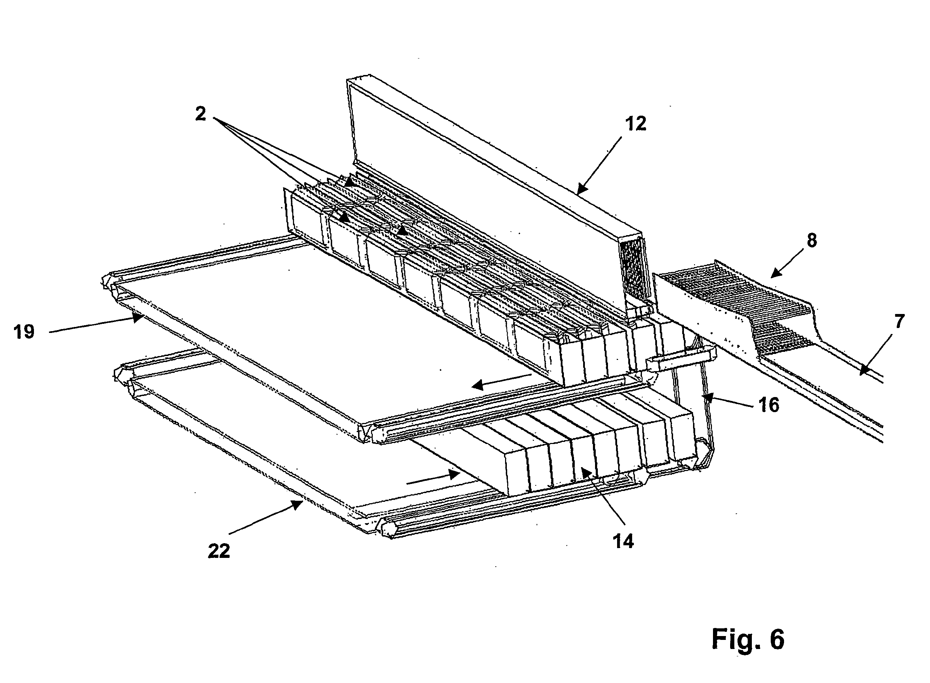

Im Weiteren gilt es das mit einer Stückgüterreihe befüllte Formmittel 14 auf die Beladeeinheit 5 überzuführen (vgl. auch Figur 2). Hierzu dient eine Bereitstellungseinheit 16, wie in Figur 5 schematisch dargestellt. Die Bereitstellungseinheit 16 ist seitlich zur Beladeeinheit 5 angeordnet und weist ein Förderband 17 mit Halterungselementen 18 auf, auf denen leere Formmittel 14 auf das Höhenniveau einer oberen Arbeitsebene 19 der Beladeeinheit 5 unmittelbar unterhalb der Transfervorrichtung 12 positioniert werden. Hierbei wird jeweils ein leeres Formmittel 14, das auf dem Höhenniveau der oberen Arbeitsebene 19 der Bedieneinheit 5 angehoben ist, mittels eines Linearförderers 20 direkt unterhalb des sich öffnenden Klappensystems 13 der Transfervorrichtung 12 geschoben. Die die vorstehend beschriebenen, mit Stückgütern beladenen Formmittel 14 gelangen im Folgenden über ein taktweise betreibbares Fördersystem 21 auf die obere Ebene 19 der Beladeeinheit 5. Die von der Bereitstellungseinheit 16 zur Befüllung bereitgestellten leeren Formmittel 14 werden aus einer unteren Arbeitsebene 22 der Beladeeinheit 5 zur Verfügung gestellt. Dies geht insbesondere aus Figur 6 hervor.

Die untere Arbeitsebene 22 der Beladeeinheit 5 sieht gleichsam zur oberen Arbeitsebene 19 ebenfalls ein taktweise betreibbares Fördersystem 23 vor, das leere Formmittel 14 in Richtung der Bereitstellungseinheit 16 fördert. Beide Arbeitsebenen 19 und 22 weisen einen festen vertikalen Abstand zueinander auf. Die untere Arbeitsebene 22 dient der Aufnahme und Pufferung leerer Formmittel 14, wohingegen die obere Arbeitsebene 19 der Beladeeinheit 5 der Komplettierung und Bereitstellung einer Vielzahl parallel nebeneinander angeordneter, mit geformten Stückgütern 2 beladene Formmittel dient. Die maximale Anzahl der nebeneinander anzuordnenden Formmittel 14 längs der oberen bzw. unteren Arbeitsebene der Beladeeinheit 5 korrespondiert zugleich auch mit jener Anzahl y von nebeneinander innerhalb des Laderaumes zu deponierenden Stückgüterstapel (s. Fig. 1).

Ist die obere Arbeitsebene 19 der Beladeeinheit 5 vollständig mit Stückgütern 2 beladenen Formmittel 14 bestückt, so gelangt die komplette Lage der Formmittel 14 über einen Übergabemechanismus auf die vertikal höhenverstellbare Fördereinrichtung 6 die mittels eines Hubtisches 20 stufenlos vertikal anhebbar bzw. absenkbar ist (s. Fig. 2). Zum Zeitpunkt der Übergabe der Formmittel 14 befindet sich die Fördereinrichtung 6 exakt in der gleichen Höhe wie die obere Arbeitsebene 19.

Die sich nun auf der Fördereinrichtung 6 befindlichen Formmittel 14, die vorzugsweise aus Dünnblechstahl geformte U-Längsprofile gefertigt sind, daher über eine mindest Eigensteifigkeit verfügen und zumindest eine offene Stirnseite aufweisen, die gemäß Bilddarstellung der Figur 2 dem Laderaum zugewandt ist, können die in den einzelnen Formmitteln enthaltenen Stückgüter, wie nachstehend beschrieben, in den Laderaum lagenweise deponiert werden. An dieser Stelle sei darauf hingewiesen, dass die Formmittel 14 zugleich auch als Lademittel eingesetzt werden und zur direkten Übergabe der Stückgüter in den Laderaum dienen. Über ein in Figur 2 schematisch dargestelltes Schlittensystem 25 verfährt die Fördereinrichtung 6 nach entsprechender vertikaler Höhenausrichtung relativ zur aktuellen oberen Ablageebene innerhalb des Laderaumes 1 die mit Stückgütern befüllten Formmittel 14 vollständig knapp oberhalb der oberen Ablageebene in den Laderaum 1. Die vertikale Positionierung der Fördereinrichtung erfolgt mit Hilfe eines Sensorsystems, das die obere Ablagebene innerhalb des Laderaums erfasst. Bevorzugte Sensoren basieren auf optischen, Licht- oder Ultraschall-Sensoren. Nach entsprechender Vertikalpositionierung werden die als Lademittel benutzen Formmittel 14 vollständig lagenweise horizontal in den Laderaum verfahren.

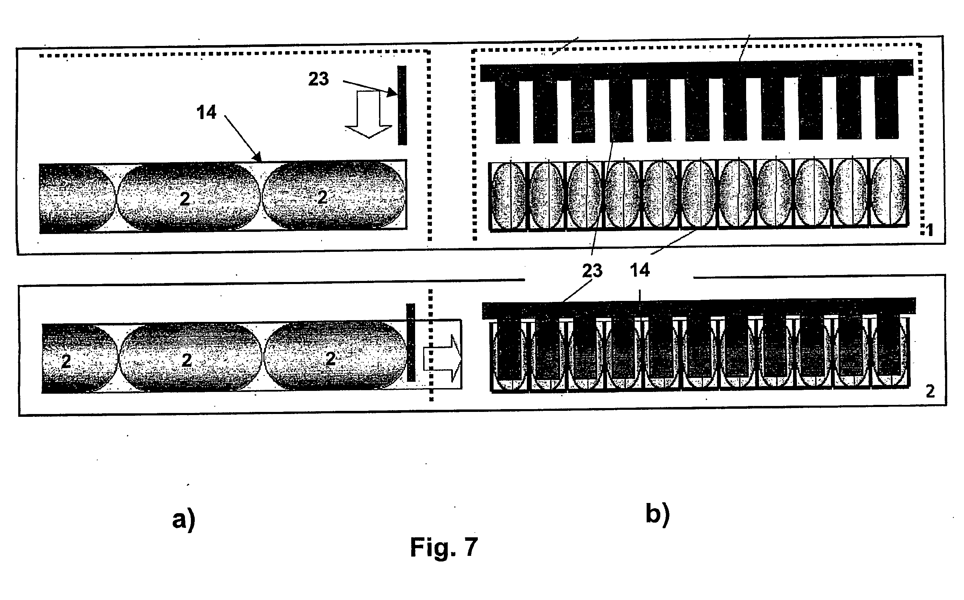

In Figur 7a ist eine schematisierte Seitenansicht einer Lage mit Stückgütern 2 befüllten Formmitteln 14 innerhalb des Laderaumes 1 dargestellt. Zu Seiten der rechten offenen Laderaumöffnung ist eine Separiereinheit 23 vorgesehen, die rechenartige Haltemittel 24 vorsieht, die senkrecht von oben stirnseitig in die Formmittel 14 abgesenkt werden (siehe obere und untere Darstellung in Fig. 7a). In Figur 7b ist eine stirnseitige Ansicht auf die Separiereinheit 23 sowie den innerhalb des Laderaumes 1 befindlichen mit Stückgütern 2 beladenen Formmitteln 14 gezeigt. In der unteren Darstellung von Fig. 7b ist die abgesenkte Position der Separiereinheit 24 gezeigt. Im Folgenden werden die einzelnen Formmittel 14 aus dem Laderaum 1 gezogen, wobei die Stückgüter 2 durch die Haltemittel 24 ortsfest innerhalb des Laderaumes 1 gehalten werden.

Die entleerten Formmittel 14 gelangen über die Fördereinrichtung 6 in die untere Arbeitsebene 22 der Beladeeinheit 5 in der sie, wie vorstehend beschrieben der Bereitstellungseinheit 16 zugeführt werden. Diese Situation ist in Figur 2 dargestellt, in der sich entleerte Formmittel 14 auf der Fördereinrichtung 6 befinden zur weiteren Übergabe an die untere Arbeitsebene 22 der Beladeeinheit 5.

Mit der vorstehend beschriebenen Anordnung ist es möglich, Laderäume füllgradoptimiert zu beladen.

Im Gegensatz zu den in der Beschreibungseinleitung zitierten zweistufigen Verladeverfahren verbleibt bei dem erfindungsgemäße Verladeverfahren kein Ladehilfsmittel innerhalb des Laderaumes, wodurch ein weitaus größerer Raumnutzungsgrad erreicht werden kann.

Ein weiterer Vorteil ergibt sich durch die Wiederverwendbarkeit der einzelnen als Lademittel verwendeten Formmittel. Jegliche Zusatzkosten, die mit Ladehilfsmittel verbunden sind entfallen vollständig.

Auch ist es möglich mit der erfindungsgemäßen Beladeanordnung kleiner dimensionierte Laderäume im Verhältnis zu den beschriebenen Dimensionen der Form- bzw. Lademittel mit Stückgütern zu beladen. In diesem Fall ist lediglich eine nur teilweise Befüllung der Formmittel mit Stückgütern vorzusehen, respektive eine nur begrenzte Anzahl von Formmittel nebeneinander auf der Beladeeinheit anzuordnen. Somit ist das Beladesystem modular an eine Vielzahl von Laderaumgeometrien anpassbar ohne dabei mit hohen Kosten verbundene konstruktive Modifikationen am Beladesystem selbst vornehmen zu müssen.

### Bezugszeichenliste

- 1: Laderaum
- 2: Stückgut
- 3: Zufördereinrichtung
- 4: Übergabeeinrichtung
- 5: Beladeeinheit
- 6: Fördereinrichtung
- 7: Linearförderer
- 8: Stauförderer
- 9: Anschlagfläche
- 10: Transportbandebene
- 11: Rollenanordnung
- 12: Transfervorrichtung
- 13: Klappensystem
- 14: Formmittel/Lademittel
- 15: Lichter Abstand
- 16: Bereitstellungseinheit
- 17: Förderband
- 18: Halterungselement
- 19: Obere Arbeitsebene
- 20: Hubtisch
- 21: Fördersystem
- 22: Untere Arbeitsebene
- 23: Separiereinheit
- 24: Haltemittel
- 25: Schlittensystem

## Patentansprüche

1. Anordnung zum Beladen eines Laderaumes (1) mit Stückgütern (2), die vorzugsweise eine wenigstens teilweise verformbare Stückgutoberfläche aufweisen, mit einer Zufördereinrichtung (3), auf der die Stückgüter (2) vereinzelt zuförderbar sind, sowie einer Übergabeeinrichtung (4), auf die die Stückgüter (2) von der Zufördereinrichtung (3) übergebbar und vermittels der die Stückgüter (2) in das Innere des Laderaums (1) verbringbar sind, wobei wenigstens ein Formmittel (14) vorgesehen ist, durch das die Stückgüter (2) in jeweils eine vorgebbare Form oder Orientierung überführbar sind, wobei die Übergabeeinrichtung (4) die Stückgüter (2) unter Beibehaltung ihrer durch das Formmittel (14) vorgegebenen Form einzeln oder in Gruppen mit Hilfe jeweils eines bewegbaren Lademittels (14) in das Innere des wenigstens einseitig offenen Laderaumes (1) überführt, und wobei eine Separiereinheit (23) vorgesehen ist, **dadurch gekennzeichnet, dass** das Lademittel als horizontal bewegbares ausgebildet ist, dass die Separiereinheit (23) die Stückgüter (2) von dem Lademittel unter Zurückziehen desselben separiert und die Stückgüter im Laderaum deponiert.

2. Anordnung nach Anspruch 1,
**dadurch gekennzeichnet, dass** das Lademittel als Formmittel (14) ausgebildet ist.

3. Anordnung nach Anspruch 1 oder 2,
**dadurch gekennzeichnet, dass** die Übergabeeinrichtung (4) eine vertikal höhenverstellbare Fördereinrichtung (6) vorsieht, auf der das wenigstens eine Lademittel (14) mit den Stückgütern (2) in einer weitgehend horizontalen Förderrichtung in das Innere des wenigstens einseitig offenen Laderaumes (1) linearbewegbar ist.

4. Anordnung nach Anspruch 1 oder 2, **dadurch gekennzeichnet, daß** der gesamte Laderaum auf einen Hubtisch angeordnet ist.

5. Anordnung nach einem der Ansprüche 1 bis 4,
**dadurch gekennzeichnet, dass** die Separiereinheit (23) in Eingriff mit wenigstens einem Stückgut (2) der innerhalb eines Lademittels (14) befindlichen Stückgüter (2) bringbar ist, und dass das wenigstens eine Lademittel (14) relativ zur Separiereinheit (23) in Gegenförderrichtung linearbeweglich ist.

6. Anordnung nach einem der Ansprüche 1 bis 4,
**dadurch gekennzeichnet, dass** die Zufördereinrichtung (3) zumindest abschnittsweise als motorisch angetriebener Linearförderer (7) ausgebildet ist und einen Endabschnitt aufweist, der als Stauförderer (8) ausgebildet ist.

7. Anordnung nach Anspruch 6,
**dadurch gekennzeichnet, dass** der Stauförderer (8) eine quer zur Förderrichtung der Zufördereinrichtung orientierte Anschlagfläche (9) aufweist.

8. Anordnung nach Anspruch 6 oder 7,
**dadurch gekennzeichnet, dass** der Stauförderer (8) eine für die Stückgüter (2) ausgebildete Gleit- oder Rollebene vorsieht, die bündig mit oder abgesenkt zur Auflägefläche des Linearförderers (7) angeordnet ist.

9. Anordnung nach einem der Ansprüche 1 bis 6,
**dadurch gekennzeichnet, dass** eine Transfervorrichtung (12) vorgesehen ist, die die auf der Zufördereinrichtung (3) zugeförderten Stückgüter (2) einzeln oder gruppenweise in jeweils ein Lademittel (14) überführt.

10. Anordnung nach Anspruch 9,
**dadurch gekennzeichnet, dass**, sofern die Stückgüter umzuorientieren sind die Transfervorrichtung (12) gabelartig ausgebildet ist und auf dem Stauförderer (8) befindliche Stückgüter (2) beidseitig zumindest teilweise umschließt und durch einen Kippvorgang und/oder einen translatorischen Vorgang in ein Lademittel (14) überführt.

11. Anordnung nach Anspruch 9 oder 10,
**dadurch gekennzeichnet, dass** eine Bereitstellungseinheit (16) für leere Lademittel (14) vorgesehen ist, die leere Lademittel (14) taktweise nachführt und diese gegenüber der Transfervorrichtung (12) ausrichtet.

12. Anordnung nach einem der Ansprüche 1 bis 11,
**dadurch gekennzeichnet, dass** das Lademittel (14) in Art eines U-förmigen Längsprofils mit wenigstens einer offenen Stirnseite oder zumindest aber als Platte ausgebildet ist.

13. Anordnung nach Anspruch 12,
**dadurch gekennzeichnet, dass** das U-förmige Längsprofil zwei voneinander beabstandete Längsprofilschenkel mit einem definierten Abstand (15) zueinander aufweist.

14. Anordnung nach Anspruch 13,
**dadurch gekennzeichnet, dass** der Abstand zwischen beiden Längsprofilschenkeln derart bemessen ist, dass ein innerhalb des Lademittels (14) befindliches Stückgut (2) von beiden Längsprofilschenkeln auf die Stückgutoberfläche einen mechanischen Zwang erfährt, und dass das Lademittel (14) eine Länge aufweist, die der Länge des Stauförderers (8) entspricht.

15. Anordnung nach einem der Ansprüche 4 bis 12,
**dadurch gekennzeichnet, dass** die Übergabeeinrichtung (4) eine Beladeeinheit (5) vorsieht, die der vertikal höhenverstellbaren Fördereinrichtung (6) unmittelbar nebengeordnet ist und wenigstens zwei vertikal übereinanderliegende Arbeitsebenen (19, 22) vorsieht, und dass die Arbeitsebenen (19, 22) jeweils ein taktweise betreibbares Fördersystem (21) zum Be- oder Entladen der Arbeitsebenen (19, 22) mit leeren oder mit Stückgüter (2) befüllten Lademittel (14) aufweisen.

16. Anordnung nach einem der Ansprüche 8 bis Anspruch 15,
**dadurch gekennzeichnet, dass** eine Vielzahl von mit Stückgüter (2) befüllte Lademittel (14) von der ersten Arbeitsebene (19) der Beladeeinheit (5) auf die vertikal höhenverstellbare Fördereinrichtung (6) überführbahr ist, dass die Lademittel parallel nebeneinander in Förderrichtung angeordnet sind, dass die Gesamtbreite über alle nebeneinander angeordneten Lademittel (14) gleich oder geringfügig kleiner ist als die Laderaumbreite, und dass jeweils die Länge der Lademittel geringfügig kleiner als die Länge des Laderaumes ist.

17. Anordnung nach einem der Ansprüche 3 bis 16,
**dadurch gekennzeichnet, dass** die vertikal höhenverstellbare Fördereinrichtung (6) wenigstens ein Sensorsystem zum Erfassen einer aktuellen Füllhöhe des mit Stückgütern befüllten Laderaumes (1) vorsieht, und dass eine Steuereinheit vorgesehen ist, die vor Überführen der Stückgüter in den Laderaum die Fördereinrichtung an die aktuelle Füllhöhe vertikal angleicht.

18. Anordnung nach einem der Ansprüche 3 bis 17,
**dadurch gekennzeichnet, dass** die Separiereinheit (23) mit der vertikal höhenverstellbaren Fördereinrichtung (6) verbunden ist und Haltemittel vorsieht, die die Stückgüter während der Bewegung der Fördereinrichtung in Gegenförderrichtung von den jeweiligen Lademittel trennt.

19. Anordnung nach Anspruch 18,
**dadurch gekennzeichnet, dass** die Separiereinheit (23) in Art eines Rechens ausgebildet ist, deren als Haltemittel ausgebildete Rechenzinken innerhalb der Lademittel absenkbar sind.

20. Anordnung nach einem der Ansprüche 1 bis 19,
**dadurch gekennzeichnet, dass** die Stückgüter mit Schüttgut, wie Getreide, Zucker oder Sand, gefüllte Säcke sind.

21. Verfahren zum Beladen eines Laderaumes mit Stückgütern, die vorzugsweise eine wenigstens teilweise verformbare Stückgutoberfläche aufweisen, die mittels einer Zufördereinrichtung (3) vereinzelt zugefördert und an eine Übergabeeinrichtung (4) übergeben werden, durch die die Stückgüter (2) in das Innere des Laderaumes verbracht werden, mit den folgenden Verfahrensschritten:
- Zufördern der Stückgüter, an einen außerhalb des Laderaumes befindlichen Bereich,
- Formen der einzelnen oder zu Gruppen zusammengefassten Stückgüter durch Einwirken wenigstens einer äußeren Kraft auf die Stückgüter,
- Übergabe der Stückgüter auf die Übergabeeinrichtung (4) sowie Einbringen der Stückgüter in den Laderaum unter Beibehaltung der Form der Stückgüter mittels mindestens eines Lademittels (14), und
**dadurch gekennzeichnet, dass**
- das Lademittel als horizontal bewegbares Lademittel ausgebildet ist, und
- Deponieren der Stückgüter innerhalb des Laderaumes durch Trennen der Stückgüter von dem Lademittel mittels einer Separiereinheit.

22. Verfahren nach Anspruch 21,
**dadurch gekennzeichnet, dass** das Formen der Stückgüter durch gegenseitiges Zusammenschieben der Stückgüter innerhalb eines Stauförderers (8) oder mittels eines Handlingsgerätes direkt durch Absetzen in das Formmittel (14) erfolgt, so dass die Stückgüter zumindest paarweise in Förderrichtung der Zufördereinheit komprimiert werden.

23. Verfahren nach Anspruch 22,
**dadurch gekennzeichnet, dass** die Stückgüter längs einer Stückgüterreihe zusammengeschoben werden und in diesem zusammengeschobenen Zustand in ein Formmittel (14) überführt werden, in dem die Stückgüter längs wenigstens einer senkrecht zur Erstreckung der Stückgüterreihe orientierten Achse komprimiert werden oder aber einzeln von einem Handlingsgerät vorzugsweise eines Industrieroboters, direkt an das Formelement eingebracht werden.

24. Verfahren nach Anspruch 23,
**dadurch gekennzeichnet, dass** das Überführen der Stückgüter in das Formmittel durch Gleiten oder Fallen der Stückgüter in die Formmittel bedingt durch ihr Eigengewicht erfolgt, wobei die Stückgüter längs zur Achse der Erdbeschleunigung innerhalb des Formmittels komprimiert werden oder mittels eines Handhabungssystems, vorzugsweise eines Industrieroboters, erfolgt.

25. Verfahren nach einem der Ansprüche 21 bis 24,
**dadurch gekennzeichnet, dass** die Stückgüter in Formmittel eingebracht werden, in denen die Stückgüter geformt werden, und dass die Formmittel als Lademittel verwendet werden, mit denen die Stückgüter in den Laderaum verbracht werden.

26. Verfahren nach Anspruch 25,
**dadurch gekennzeichnet, dass** eine Vielzahl parallel nebeneinander angeordnete mit Stückgüter befüllte Lademittel derart vorgesehen wird, dass deren gesamte Lademittelbreite der Breite des Laderaumes und jeweils die Länge der einzelnen Lademittel der Länge des Laderaumes entsprechen, und dass die Vielzahl der Lademittel horizontal in den Laderaum eingefahren wird bis die Lademittel vollständig innerhalb des Laderaumes positioniert sind.

27. Verfahren nach Anspruch 26,
**dadurch gekennzeichnet, dass** vor Einfahren der Vielzahl der Lademittel eine vertikale Ausrichtung der Lademittel in Bezug auf eine innerhalb des Laderaumes befindliche Ablagefläche vorgenommen wird.

28. Verfahren nach einem der Ansprüche 25 bis 27,
**dadurch gekennzeichnet, dass** die Stückgüter von den Lademitteln innerhalb des Laderaumes separiert werden, zur Ausbildung einer horizontalen Lage ausschließlich von Stückgütern innerhalb des Laderaumes.

29. Verfahren nach Anspruch 28,
**dadurch gekennzeichnet, dass** das Separieren durch Abgleiten der Stückgüter von den Lademitteln erfolgt, während die Lademittel aus dem Laderaum herausgefahren werden.

## Claims

1. Arrangement for loading a loading area (1) with piece goods (2), which preferably have an at least partly deformable piece good surface, with a supply device (3) on which the piece goods (2) can be supplied singly, as well as a transfer device (4) onto which the piece goods (2) can be transferred from the supply device (3) and by means of which the piece goods can be brought into the interior of the loading area (1), in which at least one shaping means (14) is provided through which the piece goods (2) can be brought into a predeterminable shape or orientation, the transfer device (4) transferring the piece goods (2), whilst maintaining their shape predetermined by the shaping means (4), individually or in groups with the aid of in each case a movable loading means (14) into the interior of the loading area (1) which is open on at least one side, and in which a separating unit (23) is provided, **characterized in that** the loading means are constructed in horizontally movable form, that the separating unit (23) separates the piece goods (2) from the loading means accompanied by the retraction thereof and deposits the piece goods in the loading area.

2. Arrangement according to claim 1, **characterized in that** the loading means are constructed as shaping means (14).

3. Arrangement according to claim 1 or 2, **characterized in that** the transfer device (4) provides a vertical, height-adjustable conveying mechanism (6) on which the at least one loading means (14) with the piece goods (2) are linearly movable in a substantially horizontal conveying direction into the interior of the loading area (1) open at least one side.

4. Arrangement according to claim 1 or 2, **characterized in that** the entire loading area is placed on a lifting table.

5. Arrangement according to one of the claims 1 to 4, **characterized in that** separating unit (23) can be brought into engagement with at least one piece good (2) of the piece goods (2) located within a loading means (14) and that the at least one loading means (14) is linearly movable in the counter-conveying direction relative to the separating unit (23).

6. Arrangement according to one of the claims 1 to 4, **characterized in that** the supply device (3) is constructed at least zonally as a motor-driven linear conveyor (7) and which has an end section constructed as an accumulation conveyor (8).

7. Arrangement according to claim 6, **characterized in that** the accumulation conveyor (8) has a stop face (9) oriented transversely to the conveying direction of the supply device.

8. Arrangement according to claim 6 or 7, **characterized in that** the accumulation conveyor (8) has a sliding or rolling plane constructed for the piece goods (2) and flush with or lowered with respect to the bearing surface of the linear conveyor (7).

9. Arrangement according to one of the claims 1 to 6, **characterized in that** a transfer mechanism (12) is provided which transfers the piece goods (2) supplied on the supply device (3) either individually or groupwise into in each case one loading means (14).

10. Arrangement according to claim 9, **characterized in that**, provided that the piece goods are to be reoriented the transfer mechanism (12) has a fork-like construction and bilaterally at least partly surrounds the piece goods (2) on the accumulation conveyor (8) and through a tilting process and/or a translatory process transfers same into a loading means (14).

11. Arrangement according to claim 9 or 10, **characterized in that** a making ready unit (16) is provided for empty loading means (14) bringing about a cyclic follow up of empty loading means and orienting the same with respect to the transfer mechanism (12).

12. Arrangement according to one of the claims 1 to 11, **characterized in that** the loading means (14) is constructed in the manner of a U-shaped longitudinal profile with at least one open front face or in the form of a plate.

13. Arrangement according to claim 12, **characterized in that** the U-shaped longitudinal profile has two mutually spaced longitudinal profile arms with a clearly defined mutual spacing (15).

14. Arrangement according to claim 13, **characterized in that** the spacing between the two longitudinal profile arms is dimensioned in such a way that a piece good (2) located within the loading means (14) is subject to a mechanical force through both longitudinal profile arms on the piece good surface and that the loading means (14) have a length corresponding to the length of the accumulation conveyor (8).

15. Arrangement according to one of the claims 4 to 12, **characterized in that** the transfer device (4) has a loading unit (5) juxtaposed directly with the vertical, height-adjustable conveying mechanism (6) and has at least two vertically superimposed working planes (19, 22), and that the working planes (19, 22) in each case have a cyclically operable conveying system (21) for loading or unloading the working planes (19, 22) with empty or piece good (2)-filled loading means (14).

16. Arrangement according to one of the claims 8 to 15, **characterized in that** a plurality of loading means (14) filled with piece goods (2) can be transferred from the first working plane (19) of the loading unit (5) onto the vertical, height-adjustable conveying mechanism (6), that the loading means are arranged in parallel, juxtaposed form in the conveying direction, that the total width over all the juxtaposed loading means (14) is equal to or slightly smaller than the loading area width and that in each case the length of the loading means is slightly smaller than the length of the loading area.

17. Arrangement according to one of the claims 3 to 16, **characterized in that** the vertical, height-adjustable conveying mechanism (6) has at least one sensor system for detecting the actual filling height of the loading area (1) filled with piece goods and that a control unit is provided which vertically matches the conveying mechanism to the actual filling height prior to the transfer of the piece goods into the loading area.

18. Arrangement according to one of the claims 3 to 17, **characterized in that** the separating unit (23) is connected to the vertical, height-adjustable conveying mechanism (6) and has holding means separating the piece goods from the loading means during the movement of the conveying mechanism in the counter-conveying direction.

19. Arrangement according to claim 18, **characterized in that** the separating unit (23) is constructed in the manner of a rake, whose teeth constructed as holding means can be lowered into the loading means.

20. Arrangement according to one of the claims 1 to 19, **characterized in that** the piece goods are bags filled with loose materials, such as cereals, sugar or sand.

21. Method for loading a loading area with piece goods, which preferably have an at least partly deformable piece good surface and which are singly supplied by means of a supply device (3) and transferred to a transfer device (4) through which the piece goods (2) can be brought into the interior of the loading area and having the following method steps:
- supplying the piece goods to an area located outside the loading area,
- shaping the individual or grouped piece goods through the action of at least one external force on the piece goods,
- transfer of the piece goods to the transfer device (4) and introduction of the piece goods into the loading area, whilst maintaining the shape of the piece goods, by means of at least one loading means (14) and
**characterized in that**
- the loading means are constructed as horizontally movable loading means and
- depositing the piece goods within the loading area by separating the piece goods from the loading means using a separating unit.

22. Method according to claim 21, **characterized in that** the shaping of the piece goods takes place by mutual sliding together of the piece goods within an accumulation conveyor (8) or by means of a handling device (14) directly by placing in the shaping means (14), so that the piece goods are compressed at least pairwise in the conveying direction of the supply unit.

23. Method according to claim 22, **characterized in that** the piece goods are slid together along a piece good row and in said slid together state are transferred into a shaping means (14) in which the piece goods are compressed along at least one axis oriented perpendicular to the extension of the piece good row or brought directly to the shaping element individually by a handling mechanism, preferably an industrial robot.

24. Method according to claim 23, **characterized in that** the transfer of the piece goods into the shaping means takes place through sliding or dropping of the piece goods into the shaping means under their own weight, the piece goods being compressed along the axis of acceleration due to gravity within the shaping means or this takes place by means of a handling system, preferably an industrial robot.

25. Method according to one of the claims 21 to 24, **characterized in that** the piece goods are brought into shaping means where they are shaped and that the shaping means are used as loading means with which the piece goods are brought into the loading area.

26. Method according to claim 25, **characterized in that** a plurality of parallel, juxtaposed loading means filled with piece goods is provided in such a way that their entire loading means width corresponds to the loading area width and the length of the individual loading means corresponds to the loading area length and that the plurality of loading means is horizontally introduced into the loading area until the loading means are completely positioned within the loading area.

27. Method according to claim 26, **characterized in that** prior to the introduction of the plurality of loading means, there is a vertical orientation of the loading means with respect to a depositing surface within the loading area.

28. Method according to one of the claims 25 to 27, **characterized in that** piece goods are separated from the loading means within the loading area for the formation of a horizontal layer exclusively of piece goods within the loading area.

29. Method according to claim 28, **characterized in that** separation takes place by the piece goods sliding off the loading means, whilst the loading means are moved out of the loading area.

## Revendications

1. Installation pour charger un espace de chargement (1) en unités de marchandises (2) présentant de préférence une surface d'unité de marchandises au moins partiellement déformable, comprenant un dispositif d'acheminement (3) sur lequel les unités de marchandises (2) peuvent être acheminées individuellement, ainsi qu'un dispositif de transbordement (4), sur lequel on peut déposer les unités de marchandises (2) provenant du dispositif d'acheminement (3) et qui permet de transférer les unités de marchandises (2) à l'intérieur de l'espace de chargement (1), dans laquelle on prévoit au moins un conformateur (14) à travers lequel les unités de marchandises (2) peuvent être acheminées chacune dans une forme ou une orientation prédéterminées, dans laquelle le dispositif de transbordement (4) amène les unités de marchandises (2), en conservant la forme prédéterminée qui leur a été donnée par le conformateur (14), individuellement ou en groupe, à l'aide à chaque fois d'un moyen de chargement (14) mobile, à l'intérieur de l'espace de chargement (1) ouvert au moins d'un côté, et installation dans laquelle est prévue une unité de séparation (23), **caractérisée en ce que** le moyen de chargement est réalisé mobile horizontalement, **en ce que** l'unité de séparation (23) sépare les unités de marchandises (2) du moyen de chargement par retrait de ce dernier et dépose les unités de marchandises dans l'espace de chargement.

2. Installation selon la revendication 1, **caractérisée en ce que** le moyen de chargement est réalisé sous la forme d'un conformateur (14).

3. Installation selon la revendication 1 ou 2, **caractérisée en ce que** le dispositif de transbordement (4) prévoit un dispositif de transport (6) réglable verticalement en hauteur, sur lequel l'au moins un moyen de chargement (14) et les unités de marchandises (2) peuvent être déplacées de manière linéaire dans un dispositif de transport sensiblement horizontal vers l'intérieur de l'espace de chargement (1) ouvert au moins d'un côté.

4. Installation selon la revendication 1 ou 2, **caractérisée en ce que** l'ensemble de l'espace de chargement est disposé sur une plate-forme mobile.

5. Installation selon l'une quelconque des revendications 1 à 4, **caractérisée en ce que** l'unité de séparation (23) peut être mise en prise avec au moins une unité de marchandises (2) parmi les unités de marchandises (2) se trouvant à l'intérieur d'un moyen de chargement (14), et **en ce que** l'au moins un moyen de chargement (14) peut être déplacé de manière linéaire par rapport à l'unité de séparation (23) dans le sens contraire de la direction d'avance.

6. Installation selon l'une quelconque des revendications 1 à 4, **caractérisée en ce que** le dispositif d'acheminement (3) présente au moins partiellement un entraînement motorisé (7), et **en ce qu'**il présente une partie terminale sous la forme d'un transporteur d'accumulation (8).

7. Installation selon la revendication 6, **caractérisée en ce que** le transporteur d'accumulation (8) présente une surface de butée (9) orientée transversalement à la direction d'avance du dispositif d'acheminement.

8. Installation selon la revendication 6 ou 7, **caractérisée en ce que** le transporteur d'accumulation (8) comprend une surface de glissement ou de roulement prévue pour les unités de marchandises (2), disposée de manière coplanaire avec la surface portante du transporteur linéaire (7) ou abaissée par rapport à celle-ci.

9. Installation selon l'une quelconque des revendications 1 à 6, **caractérisée en ce que** l'on prévoit un dispositif de transfert (12) amenant les unités de marchandises (2) acheminées sur le dispositif d'acheminement (3) individuellement ou par groupes à chaque fois dans un moyen de chargement (14).

10. Installation selon la revendication 9, **caractérisée en ce que**, dans la mesure où les unités de marchandises doivent être réorientées, le dispositif de transfert (12) est conformé en fourche et **en ce qu'**il entoure de part et d'autre au moins partiellement des unités de marchandises (2) posées sur le transporteur d'accumulation (8) et les achemine dans un moyen de chargement (14) par basculement et/ou par translation.

11. Installation selon la revendication 9 ou 10, **caractérisée en ce que** l'on prévoit une unité d'approvisionnement (16) pour moyens de chargement (14) vides, qui entraîne en cadence des moyens de chargement (14) vides et les dispose en regard du dispositif de transfert (12).

12. Installation selon l'une quelconque des revendications 1 à 11, **caractérisée en ce que** le moyen de chargement (14) est conformé à la manière d'un profil longitudinal en "U" présentant au moins une face frontale ouverte ou bien étant au moins conformé en plaque.

13. Installation selon la revendication 12, **caractérisée en ce que** le profil longitudinal en forme de "U" présente deux branches juxtaposées de profil longitudinal séparées l'une de l'autre par une distance (15) définie.

14. Installation selon la revendication 13, **caractérisée en ce que** la distance entre les deux branches de profil longitudinal est calculée de telle façon qu'une unité de marchandises (2) se trouvant dans le moyen de chargement (14) subit sur la face supérieure une contrainte mécanique exercée par les deux branches de profil longitudinal, et **en ce que** le moyen de chargement (14) présente une longueur correspondant à la longueur du transporteur d'accumulation (8).

15. Installation selon l'une quelconque des revendications 4 à 12, **caractérisée en ce que** le dispositif de transbordement (4) comporte une unité de chargement (5) disposée à proximité immédiate du dispositif de transport (6) vertical réglable verticalement en hauteur et au moins deux plans de travail (19,22) situés l'un au-dessus de l'autre dans le sens vertical, et **en ce que** les plans de travail (19,22) présentent chacun un système de transport (21) pouvant être actionné en cadence pour le chargement ou le déchargement des surfaces de travail (19,22) en moyens de chargement (14) vides ou remplis d'unités de marchandises (2).

16. Installation selon l'une quelconque des revendications 8 à 15, **caractérisée en ce qu'**une pluralité de moyens de chargement (14) remplis d'unités de marchandises (2) peuvent être transférés de la première surface de travail (19) de l'unité de chargement (5) vers le dispositif de transport (6) réglable verticalement en hauteur, **en ce que** les moyens de chargement sont disposés côte à côte parallèles dans la direction d'avance, **en ce que** la largeur totale de l'ensemble des moyens de chargement (14) disposés côte à côte est égale ou légèrement inférieure à la largeur de l'espace de chargement, et **en ce qu'**à chaque fois la longueur des moyens de chargement est légèrement inférieure à la longueur de l'espace de chargement.

17. Installation selon l'une quelconque des revendications 3 à 16, **caractérisée en ce que** le dispositif de transport (6) réglable verticalement en hauteur comporte au moins un système de détection pour détecter une hauteur de remplissage instantanée de l'espace de chargement (1) rempli d'unités de marchandises, et **en ce que** l'on prévoit une unité de commande qui amène verticalement le dispositif de transport à la hauteur de remplissage, avant le transfert des unités de marchandises vers l'espace de chargement.

18. Installation selon l'une quelconque des revendications 3 à 17, **caractérisée en ce que** l'unité de séparation (23) est reliée au dispositif de transport (6) réglable verticalement en hauteur et **en ce que** sont prévus des moyens de maintien qui séparent les unités de marchandises des moyens de chargement respectifs dans le sens inverse de la direction d'avance, durant le déplacement du dispositif de transport.

19. Installation selon la revendication 18, **caractérisée en ce que** l'unité de séparation (23) est conformée en râteau, dont les griffes réalisées sous la forme de moyens de maintien peuvent être abaissées à l'intérieur des moyens de chargement.

20. Installation selon l'une quelconque des revendications 1 à 19, **caractérisée en ce que** les unités de marchandises sont des sacs remplis de produits en vrac tels que des céréales, du sucre ou du sable.

21. Procédé de chargement d'un espace de chargement en unités de marchandises présentant de préférence une surface d'unité de marchandise au moins partiellement déformable, acheminées individuellement au moyen d'un dispositif d'acheminement (3) et transférées à un dispositif de transfert (4), au moyen duquel les unités de marchandises (2) sont amenées à l'intérieur de l'espace de chargement, comprenant les étapes suivantes :
- acheminement des unités de marchandises vers une zone située à l'extérieur de l'espace de chargement,
- formage des unités de marchandises individuelles ou rassemblées en groupes par application d'au moins une force extérieure aux unités de marchandises,
- transfert des unités de marchandises au dispositif de transfert (4) ainsi qu'acheminement des unités de marchandises dans l'espace de chargement avec conservation de la forme des unités de marchandises au moyen d'au moins un moyen de chargement (14),
**caractérisé en ce que** le moyen de chargement est un moyen de chargement mobile horizontalement et
- par le dépôt des unités de marchandises à l'intérieur de l'espace de chargement par séparation des unités de marchandises du moyen de chargement au moyen d'une unité de séparation.

22. Procédé selon la revendication 21, **caractérisé en ce que** le formage des unités de marchandises s'effectue en poussant l'une contre l'autre les unités de marchandises à l'intérieur d'un transporteur d'accumulation (8) ou au moyen d'un appareil de manipulation directement par dépôt dans le conformateur (14), de sorte que les unités de marchandises sont comprimées au moins par paires en direction du sens d'avance du dispositif d'acheminement.

23. Procédé selon la revendication 22, **caractérisé en ce que** les unités de marchandises sont groupées en une rangée d'unités de marchandises et transférées dans cet état de groupement dans un conformateur (14), dans lequel les unités de marchandises sont comprimées le long d'au moins un axe orienté perpendiculairement au sens d'extension de la rangée d'unités de marchandises, ou alors introduites individuellement directement dans l'élément conformateur par un appareil de manipulation, de préférence un robot industriel.

24. Procédé selon la revendication 23, **caractérisé en ce que** le transfert des unités de marchandises dans le conformateur par glissement ou chute des unités de marchandises dans les conformateurs s'effectue sous l'effet de leur poids propre, les unités de marchandises étant dans ce cas comprimées longitudinalement par rapport à l'axe d'accélération de la pesanteur, ou au moyen d'un système de manipulation, de préférence un robot industriel.

25. Procédé selon l'une quelconque des revendications 21 à 24, **caractérisé en ce que** l'on introduit les unités de marchandises dans des conformateurs, dans lesquels les unités de marchandises sont conformées, et **en ce que** les conformateurs sont utilisés en tant que moyens de chargement par lesquels les unités de marchandises sont transférées dans l'espace de chargement.

26. Procédé selon la revendication 25, **caractérisé en ce qu'**une pluralité de moyens de chargement juxtaposés parallèles et remplis d'unités de marchandises est prévue de telle façon, que leur largeur totale de moyens de chargement correspond à la largeur de l'espace de chargement et qu'à chaque fois la longueur des moyens de chargement individuels correspond à la longueur de l'espace de chargement, et **en ce que** la pluralité des moyens de chargement est introduite horizontalement dans l'espace de chargement jusqu'à ce que les unités de marchandises soient entièrement positionnées à l'intérieur de l'espace de chargement.

27. Procédé selon la revendication 26, **caractérisé en ce qu'**avant introduction de la pluralité des moyens de chargement, on procède à une orientation verticale des moyens de chargement par rapport à une surface de réception située à l'intérieur de l'espace de chargement.

28. Procédé selon l'une quelconque des revendications 25 à 27, **caractérisé en ce que** les unités de marchandises sont séparées des moyens de chargement à l'intérieur de l'espace de chargement pour former une couche horizontale composée uniquement d'unités de marchandises à l'intérieur de l'espace de chargement.

29. Procédé selon la revendication 28, **caractérisé en ce que** la séparation résulte de la séparation par glissement entre les unités de marchandises et les moyens de chargement pendant que les moyens de chargement sont transportés hors de l'espace de chargement.
